Europäisches Patentamt

European Patent Office

Office européen des brevets

(19)

(11) Numéro de publication: **0 079 079**
**A1**

# (12) DEMANDE DE BREVET EUROPEEN

(21) Numéro de dépôt: 82110312.4

(22) Date de dépôt: 09.11.82

(51) Int. Cl.³: **G 01 T 7/04**

(30) Priorité: 10.11.81 FR 8121086

(43) Date de publication de la demande:
18.05.83 Bulletin 83/20

(84) Etats contractants désignés:
DE GB

(71) Demandeur: NOVELEC Société à Responsabilité limitée
dite:
Zirst - Chemin des Clos
F-38240 Meylan(FR)

(72) Inventeur: Lucas, Jean-Jacques
172 Boulevard Joliot-Curie
F-38600 Fontaine(FR)

(72) Inventeur: Lafont, Guy Marc
7 Avenue du Vercors
F-38240 Meylan(FR)

(74) Mandataire: Casalonga, Axel et al,
BUREAU D.A. CASALONGA OFFICE JOSSE & PETIT
Baaderstrasse 12-14
D-8000 München 5(DE)

(54) Dispositif, ensemble et tête de détection des particules d'un aérosol présentant des propriétés radioactives.

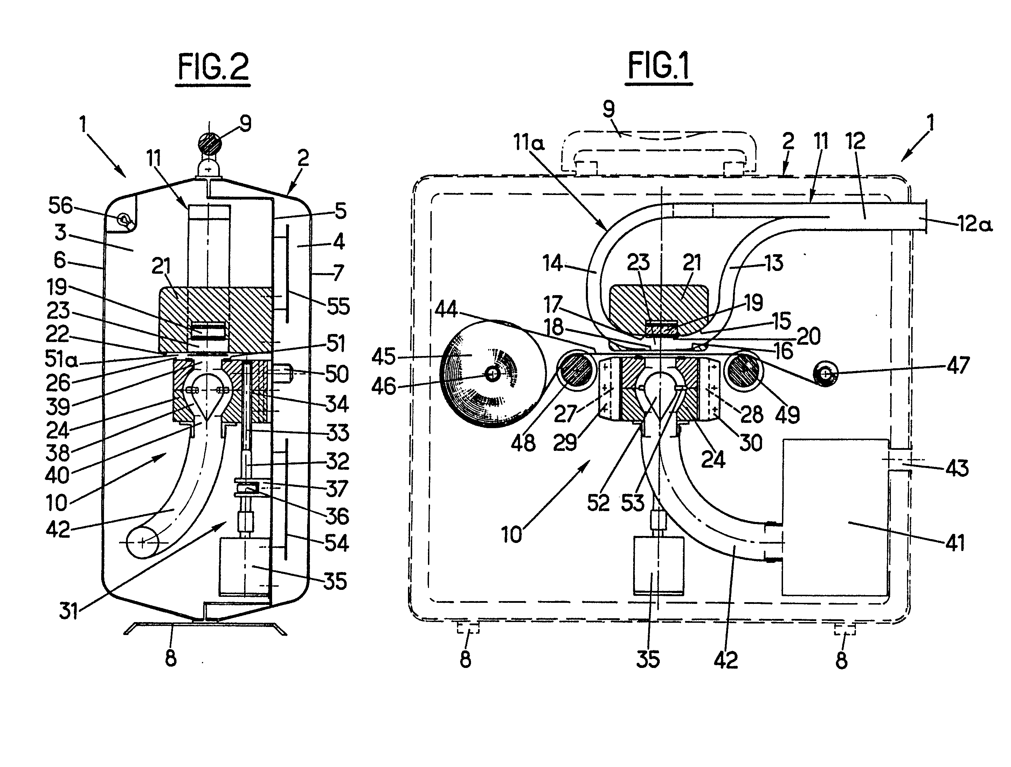

(57) Ensemble de détection (1) comprenant un dispositif de détection (10) monté dans une valise portable (2), des circuits électroniques de commande de mesure (54, 55, Fig 2) et des moyens de signalisation (56, Fig 2) le dispositif de détection (10) comprenant une tête de détection (19), un filtre en ruban (44), une chambre de répartition (23) entre la tête de détection (19) et le filtre en ruban (44), une chambre à dépression (38) disposée de l'autre côté du filtre à ruban (44) et une pompe d'aspiration (41) reliée à la chambre à dépression (38), un moyen-presseur (24) permettant de réaliser l'étanchéité du canal d'écoulement formé par la chambre de répartition (23) et la chambre à dépression (38) et des moyens étant prévus pour actionner le moyen-presseur (24) et pour faire avancer pas-à-pas ledit filtre à ruban (44) devant la tête de détection (19).

Application de l'ensemble de détection (1) à la mesure de la contamination atmosphérique et en particulier à la mesure du rayonnement β dans une ambiance γ.

FIG.1

Dispositif, ensemble et tête de détection des particules
d'un aérosol présentant des propriétés radioactives.

------------

La présente invention concerne notamment un dispositif,
un ensemble et une tête de détection des particules d'un aérosol
présentant des propriétés radioactives, pouvant être utilisés notamment pour déterminer s'il y a ou non une contamination atmosphérique
par aérosols radioactifs, notamment sur les chantiers ou dans les
locaux situés à proximité ou dans les centrales nucléaires.

On connaît actuellement des appareils de détection de
particules radioactives d'un aérosol qui comprennent deux ensembles,
l'un étant fixe et l'autre étant démontable et portant un filtre se
présentant sous la forme d'une pastille. Ces appareils sont en général
très difficiles à décontaminer et nécessitent en outre un démontage
de l'ensemble amovible à chaque fois que le filtre est usagé en vue
de son remplacement si bien qu'on est obligé de surveiller l'appareil
en permanence. D'autres appareils de détection sont également connus
mais ces autres appareils présentent l'inconvénient d'être très lourds
si bien qu'ils ne peuvent être déplacés et ne permettent pas d'effectuer
des mesures n'importe où.

La présente invention a pour but de remédier aux inconvénients des appareils de détection existants et de concevoir un dispositif et un ensemble de détection faciles à décontaminer, de réalisation simple, capables de fonctionner continuellement pendant une
période de temps relativement longue et, dans une variante, portables.

Le dispositif de détection de particules d'un aérosol
présentant des propriétés radioactives, selon la présente invention,
comprend un canal d'écoulement pour le gaz de l'aérosol, un filtre de
retenue des particules disposé en travers du canal d'écoulement et
au travers duquel passe le gaz, ce canal d'écoulement comprenant en
amont dudit filtre une chambre de répartition renfermant dans sa
paroi opposée audit filtre une tête de détection dont la face active
fait face à distance audit filtre et comprenant au moins une entrée
pour le gaz et, en aval du filtre, une chambre de répartition reliée
à une pompe d'aspiration.

Le dispositif de détection selon la présente invention
est tel que ledit filtre se présente sous la forme d'un ruban, qu'un
moyen est prévu pour faire avancer pas-à-pas ledit filtre dans le sens de sa longueur devant la face active de ladite tête de détection, qu'un appui entoure ledit canal d'écoulement et fait face audit filtre du côté de ladite chambre de répartition et qu'un moyen-presseur est prévu pour appliquer ou presser ledit filtre contre ledit appui pour que le canal d'écoulement soit étanche.

Le dispositif de détection selon la présente invention comprend, de préférence, un bloc qui délimite ladite chambre de dépression et qui est monté coulissant pour se rapprocher ou s'éloigner dudit appui, ledit bloc comprenant un contre-appui qui entoure ledit canal d'écoulement et fait face audit appui de l'autre côté dudit filtre et que des moyens d'entraînement sont prévus pour déplacer ledit bloc dans le sens qui le rapproche dudit appui de manière que ledit contre-appui applique ou presse ledit filtre contre ledit appui et dans le sens qui l'éloigne dudit appui de manière à libérer ledit filtre en vue de son avancement, ledit bloc et ledit moyen d'entraînement formant ledit moyen-presseur.

Selon la présente invention, lesdits moyens d'entraînement sont de préférence formés par un système vis-écrou dont la vis ou l'écrou est solidaire dudit bloc et dont l'écrou ou la vis peut être entraîné(e) par un moteur électrique dans un sens ou dans l'autre pour rapprocher ou éloigner ledit bloc dudit appui.

Dans une variante de réalisation préférée de la présente invention, lesdits moyens d'entraînement comprennent au moins un ressort qui agit sur ledit bloc dans le sens qui le rapproche dudit appui et au moins un électro-aimant dont la partie mobile est reliée audit bloc, cet électro-aimant agissant à l'encontre dudit ressort en vue de d'éloigner ledit bloc dudit appui. Cette variante de réalisation permet d'avoir une force de pincement du filtre entre le bloc et l'appui constante car elle est exercée par ledit ressort et, de plus, le temps nécessaire à l'avancement du filtre est bref car le mouvement d'éloignement du bloc est provoqué par l'électro-aimant.

Selon la présente invention, la chambre à dépression que délimite ledit bloc est de préférence reliée à ladite pompe d'aspiration par un tuyau flexible ou un soufflet.

Le dispositif de détection selon la présente invention comprend, de préférence, deux supports adaptés pour recevoir ledit filtre en ruban sous la forme de rouleaux, l'un portant le rouleau de filtre en ruban débiteur et l'autre recevant le filtre usagé, le filtre en ruban s'étendant d'un support à l'autre en passant entre ledit appui et ledit moyen-presseur et ledit support recevant le filtre usagé étant susceptible d'être entraîné en rotation par un moteur électrique de manière à faire avancer pas-à-pas dans le sens de sa longueur ledit filtre en ruban devant ladite tête de détection.

Le dispositif de détection selon la présente invention peut également comprendre deux rouleaux de guidage dudit filtre en ruban, le filtre en ruban s'étendant d'un rouleau à l'autre en passant entre ledit appui et ledit moyen-presseur. Ces deux rouleaux de guidage peuvent être placés entre lesdits supports.

Le dispositif de détection selon la présente invention comprend, de préférence, une fente latérale ouverte ou un espace libre latéral ouvert permettant une introduction dudit filtre en ruban entre ledit appui et ledit moyen-presseur en n'importe quel endroit de sa longueur en le glissant latéralement. De cette manière, la mise en place du filtre en ruban en face de la tête de détection est très simple.

Le dispositif de détection selon la présente invention comprend, de préférence, une tubulure d'amenée du gaz comprenant : un conduit d'entrée se divisant en deux pour former une boucle, une partie de la longueur de ladite boucle formant ladite chambre de répartition et comprenant deux faces parallèles opposées dans lesquelles sont formées deux ouvertures correspondantes, l'une des ouvertures étant prévue pour ladite tête de détection tandis que la face extérieure de la paroi entourant l'autre ouverture forme ledit appui pour ledit filtre en ruban.

En vue d'une protection, le dispositif de détection selon la présente invention peut comprendre un blindage en plomb entourant ledit canal d'écoulement et ladite tête de détection.

Selon la présente invention, le dispositif de détection comprend de préférence une feuille mince en matière plastique montée de manière amovible en vue de son changement devant la face active de ladite tête de détection de manière à protéger cette dernière.

La présente invention concerne également un ensemble de détection des particules d'un aérosol présentant des propriétés radioactives, cet ensemble se présentant sous la forme d'une valise portable facilement par une personne et comprenant, à l'intérieur, le dispositif de détection qui vient d'être décrit.

Dans ce but, l'ensemble de détection selon la présente invention comprend une valise portable comprenant au moins deux compartiments séparés par une cloison et un couvercle d'accès par compartiment, le dispositif de détection défini ci-dessus étant monté dans un des compartiments tandis que les circuits électroniques de commande et de mesure qui y sont associés sont montés dans l'autre, des moyens de signalisation lumineux et/ou sonores reliés au circuit électronique étant montés sur ladite valise et les moyens de signalisation lumineux étant visibles de l'extérieur de cette valise.

Selon la présente invention, le dispositif de détection et les circuits électroniques sont de préférence montés sur ladite cloison de séparation.

La présente invention concerne également une tête de détection particulière destinée à être montée dans le dispositif de détection défini ci-dessus, cette tête de détection étant adaptée notamment pour la mesure d'activité superficielle $\beta$ sur la surface formée par ledit filtre, dans une ambiance $\gamma$. On a cherché à réaliser une tête de détection ne nécessitant de préférence pas de blindage tout en conservant de hautes performances, à maximiser le rapport: surface de détecteur-volume de la tête de détection et à obtenir un bruit de fond aussi faible que possible.

On est arrivé à ce résultat en concevant une tête de détection comprenant successivement un premier détecteur à semi-conducteur plan en regard de ladite surface, un écran absorbant le rayonnement $\beta$ en provenance de ladite surface et un second détecteur à semi-conducteur plan, lesdits détecteurs et ledit écran étant empilés de manière à former une unité, les détecteurs ayant sensiblement la même épaisseur, ledit premier détecteur servant à la mesure de l'activité $\beta$ et étant sensible au rayonnement $\gamma$ et ledit second détecteur servant à la mesure du rayonnement $\gamma$ en vue de la correction de la mesure effectuée par le premier détecteur. Il est également préférable que lesdits détecteurs aient la même surface.

Selon la présente invention, il est préférable de choisir un écran tel que des électrons n'atteignent pas le second détecteur tout en limitant la distance séparant lesdits détecteurs pour que la réponse dans un flux $\gamma$ extérieur soit sensiblement identique ou dans un rapport constant quel que soit la distribution de ce flux.

Dans une réalisation possible de la tête de détection, lesdits détecteurs peuvent être directement fixés à l'écran.

On peut également concevoir une tête de détection telle que lesdits détecteurs et ledit écran soient montés dans un boîtier présentant une ouverture du côté de ladite surface.

La présente invention sera mieux comprise à l'étude d'un ensemble de détection portable, en vue de déterminer la contamination atmosphérique, comprenant un dispositif de détection des particules d'un aérosol monté dans une valise et une tête de détection particulière décrit à titre d'exemple non limitatif et illustré par le dessin sur lequel :

- la figure 1 représente une coupe longitudinale dudit ensemble ;

- la figure 2 montre une coupe transversale dudit ensemble ;

- la figure 3 montre en coupe une tête de détection particulière ;

et la figure 4 montre une variante de réalisation dudit ensemble selon une coupe correspondant à la figure 2.

L'ensemble de détection portable représenté sur les figures 1 et 2 repéré d'une manière générale par la référence 1 comprend une valise repérée d'une manière générale par la référence 2.

La valise 2 comprend deux compartiments 3 et 4 qui sont séparés par une cloison verticale 5. Dans l'exemple représenté, les compartiments 3 et 4 sont délimités par des couvercles en forme de cuvette 6 et 7 démontables, les moyens de liaison entre les couvercles 6 et 7 et le bord périphérique de la cloison 5 n'ayant pas été représentés car étant classiques. De préférence, la valise 2, lorsque les couvercles 6 et 7 sont montés, est étanche pour éviter toute infiltration à l'intérieur de la valise de poussières ou de produits liquides.

A sa partie inférieure, la valise 2 comprend deux pieds 8 permettant de poser la valise et de la maintenir verticale et comprend à sa partie supérieure une poignée de préhension manuelle 9 prévue pour son transport.

Le dispositif de détection 10 comprend une tubulure d'amenée du gaz repérée d'une manière générale par la référence 11 et comprenant un conduit d'entrée 12 s'étendant longitudinalement à la valise 2 et présentant une extrémité ouverte 12a s'étendant légèrement à l'extérieur de la valise 2. L'autre extrémité du conduit 12 se divise en deux conduits 13 et 14 qui se rejoignent de manière à former une boucle 11a. La boucle 11a formée par les conduits 13 et 14 est dans un plan vertical parallèle à la cloison 5 et s'étend vers le bas. Les conduits 13 et 14 sont, dans l'exemple représenté, de section rectangulaire. Pour éviter que l'extrémité 12a ne soit bouchée accidentellement, on pourrait par exemple l'entourer à distance par une grille à grande maille n'arrêtant pas les poussières et ne perturbant pas de préférence l'écoulement de l'air.

La partie inférieure de la boucle 11a comprend deux parois opposées parallèles sensiblement horizontales 15 et 16. Dans la paroi supérieure 15 est ménagée une ouverture 17 et dans la paroi inférieure 16 est ménagée une ouverture 18, les ouvertures 17 et 18 étant l'une en face de l'autre et cylindriques.

Dans l'ouverture 17 de la paroi supérieure 15 est disposée une tête de détection cylindrique 19 dont l'axe est vertical et dont la face active qui est tournée vers l'ouverture 18 est sensiblement au niveau de la paroi supérieure 15. Une feuille 20 en matière plastique est montée juste devant la face acrive de la tête de détection 19 pour se trouver sensiblement au niveau de la face intérieure de la paroi 15.

La partie inférieure de la boucle formée par les conduits 13 et 14 et la tête de détection 19 sont entourés par un bloc-support 21 qui, dans l'exemple représenté, se présente sous la forme d'un parallélépipède dont la face inférieure horizontale 22 est au niveau de la face extérieure de la paroi 16. Le bloc 21 est fixé à la cloison 5 de la valise 2 par tout moyen connu et par exemple par des vis non représentées.

Entre le bord de l'ouverture 17 de la paroi supérieure 15 et la tête de détection 19 ou la feuille 20 est créée une liaison étanche qui peut être effectuée par tout moyen connu. Par exemple, la feuille en matière plastique 20 peut être fixée à un anneau qui peut être vissé dans l'ouverture 17, la tête de détection étant par exemple montée dans un évidement du bloc 21 par une vis.

Entre les parois 15 et 16 est donc formée une chambre de répartition 23 dans laquelle pénètre le gaz en provenance de l'extrémité 12a du conduit d'entrée 12 par deux côtés latéraux pour s'écouler par l'ouverture 18 de la paroi inférieure 16.

En dessous de la paroi inférieure 16 de la tubulure d'amenée 11, un bloc 24 qui, dans l'exemple représenté, est de forme sensiblement parallélépipèdique et comprend une face supérieure 26 sensiblement horizontale, est monté coulissant dans le sens vertical sur la cloison 5. Dans ce but, le bloc 24 comprend deux épaulements latéraux 27 et 28 qui sont tenus par des glissières verticales 29 et 30 fixées sur la cloison 5 par exemple par des vis.

De manière à déplacer vers le haut ou vers le bas le bloc 24, il est prévu un moyen d'entraînement repéré d'une manière générale par la référence 31.

Le moyen d'entraînement 31 comprend un axe vertical 32 dont la partie supérieure 33 est filetée et pénètre dans un trou taraudée 34 du bloc 24. L'extrémité inférieure de l'axe 32 est reliée à un moteur électrique ou à un moto-réducteur 35 qui est fixé à la cloison 5. Entre le moteur 35 et sa partie filetée 33, l'axe 32 comprend un épaulement 36 qui est pris entre les deux doigts d'une fourchette 37 fixée à la plaque 5. Cette fourchette 37, en coopérant avec l'épaulement 36, maintient en translation l'axe 32. Ainsi, lorsque le moteur 35 va tourner dans un sens ou dans l'autre, il va entraîner, par l'intermédiaire de l'axe 32, le bloc 24 en translation vers lè haut ou vers le bas.

Le bloc 24 comprend un passage vertical sensiblement cylindrique déterminant une chambre à dépression 38 dont l'ouverture supérieure 39 est en face de l'ouverture 18 de la paroi inférieure 16 de la tubulure 11 et sensiblement de même diamètre et dont l'ouverture inférieure 40 est, par l'intermédiaire d'un tuyau 42, reliée à une pompe d'aspiration 41 fixée sur la cloison 5, ce tuyau étant flexible de manière à ne pas gêner le mouvement de translation du bloc 24. Les extrémités du tuyau flexible 42 sont fixées de manière classique, l'un au bloc 24 et l'autre au conduit d'entrée de la pompe d'aspiration 41. La pompe d'aspiration 41 comprend un conduit de sortie 43 qui s'étend longitudinalement à la valise 2 et qui débouche à l'extérieur de celle-ci. Sur le dessin, le conduit de sortie 43 débouche du même côté que l'extrémité ouverte 12a du conduit d'amenée 12. Pour être sûr que l'air s'échappant ne soit pas réaspiré ., on disposerait de préférence le conduit 43 du côté opposé à l'entrée 12a ou sur l'un des côtés latéraux de la valise 2.

Un filtre en ruban 44, enroulé sous la forme d'un rouleau 45 disposé sur un support tel qu'un axe 46 monté sur la cloison 5, s'étend entre la face extérieure de la paroi 16 de la tubulure d'amenée 11 et la face supérieure 26 du bloc 24 et est enroulé autour d'un deuxième support tel qu'un axe 47 qui est également monté sur la cloison 5. Pour que le filtre en ruban 44 s'étende sensiblement horizontalement entre la face extérieure de la paroi 16 et la face supérieure 26 du bloc 24, il est prévu deux rouleaux latéraux 48 et 49 montés tournant sur la cloison 5 et comprenant une gorge à fond plat contre lequel le filtre en ruban 44 prend appui. On pourrait en outre rajouter un rouleau presseur appliquant le ruban 44 sur le rouleau 48 et une enveloppe de protection entourant à distance l'axe 47, cette enveloppe de protection recevant, à l'intérieur, le filtre utilisé et protégeant le reste de l'appareil contre les poussières.

Lors de l'aspiration, le filtre 44 risque de se déformer et de pénétrer dans l'ouverture 39 du bloc en s'éloignant de la tête de détection. Cette déformation risque de fausser la mesure. Pour éviter cet inconvénient, on peut disposer dans l'ouverture 39 une grille formée par exemple uniquement par deux traverses fines, cette grille maintenant le filtre sensiblement plan sans pour autant perturber l'écoulement de l'air au travers de ce filtre.

De manière à faire avancer le filtre en ruban 44, l'axe-support 47 peut être entraîné en rotation par un moteur électrique 50 fixé sur la cloison 5 dans le compartiment 4.

Le filtre en ruban 44 s'étend entre l'ouverture 18 de la chambre 23 et l'ouverture 39 de la chambre 38 et a une largeur supérieure au diamètre de ces ouvertures pour déborder de chaque côté.

Dans une position représentée sur les figures 1 et 2, le bloc 24 est dans sa position basse et est donc éloigné de la paroi inférieure 16 de la tubulure d'amenée 11. De manière à créer un canal d'écoulement du gaz complètement étanche depuis l'entrée 12a de la tubulure d'amenée 11 jusqu'à la pompe d'aspiration 41, il suffit d'actionner le moteur 35 pour déplacer le bloc 24 vers le haut de telle sorte que sa face supérieure 26 vienne appliquer ou presser de manière étanche le filtre en ruban 44 contre la face extérieure de la paroi 16 entourant l'ouverture 18. Afin de faciliter l'étanchéité, on a prévu sur la face 26 du bloc 24 un épaulement 51 formé par exemple par un joint, cet épaulement s'étendant tout autour de l'ouverture 39 de la chambre à dépression 38. On peut également remarquer que la face extérieure de la paroi 16 de la tubulure 11 forme un appui pour le filtre 44, que l'épaulement 51 forme un contre-appui pour le filtre 44 et que le bloc 24 mobile forme un moyen-presseur permettant de rendre étanche le canal d'écoulement au niveau du filtre. Dans la position décrite ci-dessus, dans laquelle le bloc 24 presse le filtre en ruban 44 contre la face extérieure de la paroi 16, correspond à la position dans laquelle on peut effectuer la mesure de la contamination atmosphérique. En effet, en actionnant la pompe 41, on aspire l'air atmosphérique chargé de particules ou poussières, l'air pénétrant dans le canal étanche formé par la tubulure 11, la chambre 38 et le tuyau flexible par l'extrémité 12a de la tubulure 11 extérieure à la valise 2 et s'échappant par le conduit de sortie 43 de la pompe 41 qui débouche à l'extérieur de la valise 2 tandis que les particules ou poussières transportées par l'air se déposent progressivement sur la face tournée vers la tête de détection 19 du filtre en ruban 44. Lorsque, au bout d'une période de mesure, la quantité de particules ou poussières déposée sur la partie du filtre en ruban délimitée par l'ouverture 18 de la paroi inférieure 16 de la tubulure 11 devient trop importante pour continuer la mesure de l'activité radioactive des particules, on doit faire avancer d'un pas le filtre en ruban pour en disposer une partie neuve devant la tête de détection.

Pour cela, après avoir de préférence arrêté la pompe 41, on actionne le moteur 35 pour faire redescendre le bloc 24 et, grâce au moteur 50, on tire sur le filtre en ruban 44 pour le faire avancer d'un pas. On fait alors remonter le bloc 24 à l'aide du moteur 35 pour créer de nouveau l'étanchéité nécessaire du canal d'écoulement pour effectuer une nouvelle période de mesure.

Comme on peut le voir en particulier sur la figure 2, lorsque le bloc est dans sa position écartée de la face externe de la paroi 16 de la chambre 23, il existe une fente ouverte ou un espace libre 51a s'ouvrant latéralement qui permet un accès entre l'appui formé par la face externe de la paroi 16 de la tubulure 11 et le contre-appui formé par le joint 51. La fente 51a est utile pour le changement du rouleau de filtre en ruban lorsque celui-ci est complètement utilisé. En effet, elle permet de disposer aisément la partie d'extrémité d'un nouveau filtre en ruban en la glissant latéralement par la fente 51a pour disposer le nouveau filtre en face de la tête de détection, le nouveau rouleau de filtre en ruban étant alors monté sur l'axe 46 et l'extrémité libre du filtre en ruban étant accrochée à l'axe moteur 47 par tout moyen connu.

Dans l'exemple représenté, les blocs 21 et 24 sont réalisés en plomb et un noyau 52 est disposé dans la chambre à dépression 38, ce noyau 52 étant maintenu au bloc 24 grâce à des pattes radiales 53, le bloc 24 étant, en vue du montage du noyau 52, en deux parties. On peut noter que dans certaines applications où le blindage n'est pas nécessaire, les blocs 21 et 24 et le noyau 52 peuvent être en une autre matière telle qu'une matière plastique.

En outre, dans le compartiment 4 de la valise 2 sont disposés les circuits électroniques de commande et de mesure qui sont représentés sur la figure par deux plaques 54 et 55 qui sont fixées sur la cloison 5. Sur le couvercle 6 sont montés des moyens de signalisation tels que des ampoules 56, ces ampoules 56 étant visibles de l'extérieur. Ces moyens de signalisation peuvent également comprendre des alarmes sonores. On peut également prévoir, dans la valise 2 un emplacement en vue de la réception d'une source d'alimentation électrique telle qu'une batterie.

Il est bien évident que la tête de détection 19, le moteur 35, le moteur 50, la pompe d'aspiration 41 et les ampoules 56 sont connectés, par exemple par des fils non représentés, aux circuits électroniques 54 et 55 et qu'il peut être prévu un fil d'amenée de courant électrique extérieur.

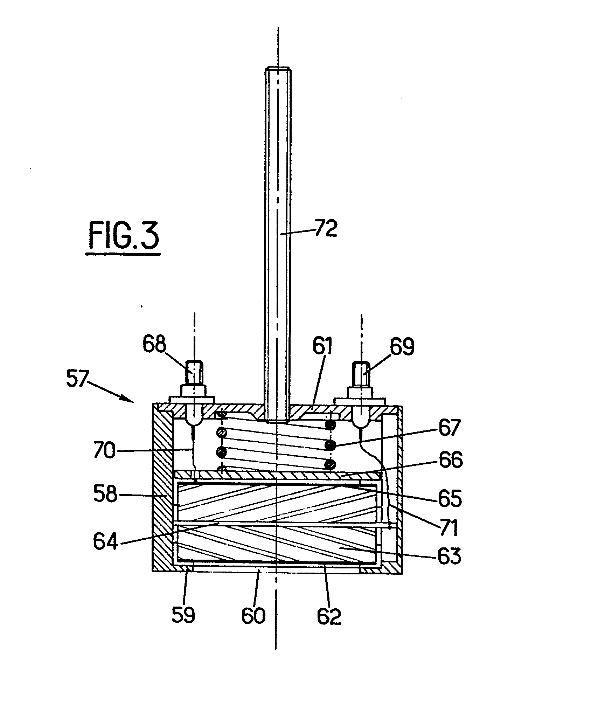

En référence à la figure 3, on va maintenant décrire une tête de détection d'une structure particulière bien adaptée pour être montée dans le dispositif de détection 10 représenté sur les figures 1 et 2, cette tête de détection coucourrant à diminuer les dimensions de ce dispositif de détection et permettant en conséquence de diminuer le poids de l'ensemble de détection 1.

La tête de détection représentée sur la figure 3 et repérée d'une manière générale par la référence 57 est adaptée pour la mesure d'activité superficielle $\beta$ sur la surface formée par le filtre 44 qui se trouve en regard de la tête de détection dans une ambiance $\gamma$ .

La tête de détection 57 comprend un boîtier formé par une enveloppe cylindrique 58 munie à une de ses extrémités d'un épaulement intérieur 59 déterminant une ouverture 60 et d'un couvercle 61 formant l'autre extrémité de l'enveloppe 58.

A partir de l'ouverture 60 et en appui sur l'épaulement 59, la tête de détection 57 comprend successivement un premier détecteur à semi-conducteur 62 se présentant sous la forme d'un disque, un écran ou absorbant 63 se présentant sous la forme d'un cylindre, qui dans l'exemple représenté est en deux parties séparées par un film isolant radial 64 dont les faces sont métallisées mais qui pourrait être en une seule pièce, un second détecteur à semi-conducteur 65 se présentant également sous la forme d'un disque de même surface que le détecteur 62, une rondelle pleine 66 et un ressort 67 placé entre la rondelle 66 et le couvercle 61. De cette manière, la tête de détection 57 est conçue de telle sorte que ses éléments servant à la détection sont empilés dans un boîtier de manière à former une unité de petit volume.

Sur le couvercle 61 sont prévues deux connexions de branchement extérieur 68 et 69, la connexion 68 étant reliée électriquement au détecteur 65 par un fil 70 et la connexion 69 étant reliée électriquement à la face métallisée inférieure de l'isolant 64 par un fil 71 qui s'étend dans une rainure axiale de l'enveloppe 58 de manière à contourner la rondelle pleine 66 et l'écran 63. La face métallisée supérieure de l'isolant 64 est reliée électriquement à la masse de l'enveloppe 58. Les connexions de branchement extérieur 68 et 69 peuvent être reliées aux circuits électroniques 54 et 55 par des fils électriques tels que des câbles blindés.

La tête de détection 57 comprend en outre une tige filetée axiale 72 fixée au couvercle 61, cette tige filetée 72 étant prévue pour la fixation de la tête de détection 57 au bloc 21 du dispositif de détection 10 représenté sur les figures 1 et 2.

Les détecteurs 62 et 65 sont conçus de telle sorte que le détecteur 62 sert à la mesure de l'activité $\beta$ tout en étant sensible au rayonnement $\gamma$ et que le détecteur 65 mesure le rayonnement $\gamma$ en vue de la correction de la mesure effectuée par le détecteur 62, l'écran 63 qui peut être par exemple en aluminium servant à absorber le rayonnement $\beta$.

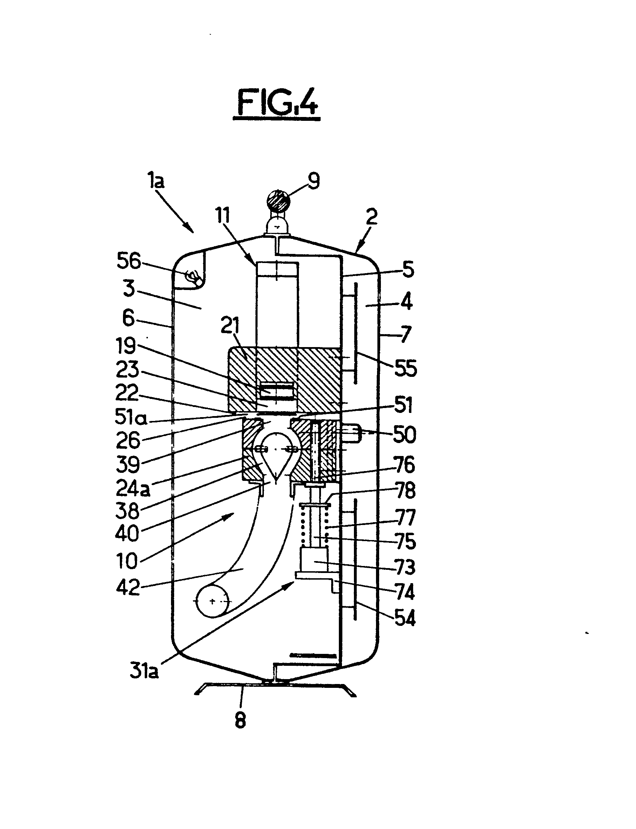

En référence à la figure 4, on va maintenant décrire un ensemble de détection 1a qui correspond à l'ensemble de détection 1 représenté sur les figures 1 et 2 et qui s'en différencie uniquement par le fait qu'il comprend, un moyen d'entraînement du bloc 24 différent.

Dans cette variante, le moyen d'entraînement à moteur 31 de l'ensemble de détection 1 est remplacé par un moyen d'entraînement 31a à électro-aimant.

Le moyen d'entraînement 31a prévu dans cette variante comprend en effet un électro-aimant 73 dont le carter extérieur est fixé à la cloison 5 par l'intermédiaire d'une console 74. La tige mobile 75 de l'électro-aimant 73 est parallèle aux glissières 27 et 28 et s'étend ou est prolongée vers le haut jusqu'au bloc 24a, l'extrémité supérieure de la tige 75 étant fixée au bloc 24a. Dans l'exemple représenté, l'extrémité supérieure 76 de la tige 75 est vissée dans le bloc 24a.

Le moyen d'entraînement 31a comprend également un ressort 77 qui agit sur le bloc 24a dans le sens qui le rapproche du bloc 21. Dans l'exemple représenté, le ressort 77 est placé autour de la tige 75 et prend appui d'une part sur le bord supérieur du carter de l'électro-aimant 73 et d'autre part contre un épaulement 78 que porte la tige 75. Comme le ressort 77 est placé en dessous du bloc 24, il doit être suffisamment puissant pour porter le bloc 24a et les éléments que portent ce dernier et pour exercer la force de pincement du filtre 44 entre l'épaulement 51 et la paroi 20 entourant l'ouverture 18.

Lorsque l'on désire libérer le filtre 44, on actionne l'électro-aimant 73 qui tire vers le bas le bloc 24a en comprimant le ressort 77. Lorsque le filtre est avancé, on relâche l'électro-aimant 73 et alors le ressort 77 remonte le bloc 24a et applique le filtre 44 contre la paroi 20 entourant l'ouverture. On peut noter que la force de pincement du filtre 44 sera à chaque fois la même car le ressort 77 revient à sa position initiale.

On peut en outre remarquer que ce moyen d'entraînement 31a est plus rapide que le moyen d'entraînement 31 prévu précédemment. En conséquence, le temps nécessaire au changement de position du filtre 44 devrait être avantageusement raccourci.

L'ensemble de détection tel qu'il vient d'être décrit et tel qu'il est représenté sur les figures 1 et 2 présente bien des avantages . En effet, il peut être très léger et comme il se présente sous la forme d'une valise, il peut être facilement transporté manuellement et disposé à l'endroit exact où l'on désire mesurer une contamination atmosphérique possible. En outre, il comporte des moyens de signalisation qui permettent d'avertir immédiatement le personnel et il peut présenter une autonomie de fonctionnement très longue. En effet, grâce au fait que le filtre se présente sous la forme d'un ruban et que sont prévus des moyens pour faire avancer le filtre 44 et des moyens pour créer l'étanchéité du canal d'écoulement de l'air, on peut effectuer un changement très rapide de la partie de filtre utile et donc avoir une surveillance pratiquement continue de la contamination. Bien sûr les circuits électroniques 54, 55 doivent être capables de faire fonctionner de manière automatique l'ensemble de détection 1 et en particulier de commander la pompe d'aspiration 41, les moteurs 35 et 50, effectuer les mesures de détection à l'aide de la tête de détection 19, d'interpréter ces mesures pour commander les moyens de signalisation 56 et de signaler tous les défauts de fonctionnement et notamment le manque de filtre.

Un autre avantage de l'ensemble de détection 1 représenté sur les figures 1 et 2 réside dans le fait que la valise 2 comprend deux compartiments 3 et 4 séparés si bien que l'accès à chaque compartiment peut être sélectionné. En effet, l'accès au compartiment 3 notamment pour le changement du filtre 44 peut être autorisé à un personnel peu qualifié tandis que l'accès au compartiment 4 dans lequel sont disposés les circuits électroniques peut être autorisé à un personnel plus qualifié. A cet effet, des serrures différentes peuvent être montées sur les couvercles 6 et 7 des compartiments 3 et 4.

La présente invention ne se limite évidemment pas à l'exemple ci-dessus décrit. En effet, on peut concevoir en particulier un dispositif de détection présentant un bloc 24 fixe sur lequel pourrait être monté un moyen-presseur disposé dans le canal d'écoulement et capable de former l'étanchéité à l'endroit du filtre en ruban, on peut concevoir une valise de forme complètement différente et on peut réaliser une tête de détection montée d'une manière différente tout en conservant les détecteurs et l'écran empilés. On aurait pu également réaliser le dispositif de détection 10 d'une manière différente en prévoyant par exemple de monter le bloc 21 à l'extrémité de colonnes fixées à leur extrémité inférieure à un support monté sur la cloison, de monter le bloc 24 coulissant sur les colonnes entre le bloc 21 et ledit support et de disposer des ressorts de rappel autour desdites colonnes entre le bloc 24 et ledit support et des électro-aimants fixés sur ce support et agissant à l'encontre de ces ressorts de rappel. Bien d'autres variantes sont possibles sans sortir du cadre de la présente invention.

14

REVENDICATIONS

1. Tête de détection adaptée pour la mesure d'activité superficielle β sur une surface formée notamment par un filtre, dans une ambiance γ , caractérisée par le fait qu'elle comprend successi- . vement un premier détecteur à semi-conducteur plan en regard de ladite surface, un écran absorbant le rayonnement β en provenance de ladite surface et un second détecteur à semi-conducteur plan, lesdits détecteurs et ledit écran étant empilés de manière à former une unité, les détecteurs ayant sensiblement la même épaisseur, ledit premier détecteur servant à la mesure de l'activité β et étant sensible au rayonnement γ et ledit second détecteur servant à la mesure du rayonnement γ en vue de la correction de la mesure effectuée par le premier détecteur.

2. Tête de détection selon la revendication 1, caractérisée par le fait que lesdits détecteurs ont la même surface.

3. Tête de détection selon l'une des revendications 1 et 2, caractérisée par le fait que l'épaisseur dudit écran est tel que les électrons n'atteignent pas le second détecteur tout en limitant la distance séparant lesdits détecteurs pour que la réponse dans un flux extérieur soit sensiblement identique ou dans un rapport constant quel que soit la distribution de ce flux.

4. Tête de détection selon l'une quelconque des revendications 1 à 3, caractérisé par le fait que lesdits détecteurs sont directement fixés à l'écran.

5. Tête de détection selon l'une quelconque des revendications 1 à 5, caractérisée par le fait que lesdits détecteurs et ledit écran sont montés de manière empilée dans un boîtier présentant une ouverture du côté de ladite surface.

6. Dispositif de détection des particules d'un aérosol présentant des propriétés radioactives, comprenant un canal d'écoulement pour le gaz de l'aérosol, un filtre de retenue des particules disposé en travers du canal d'écoulement et au travers duquel passe ledit gaz, ce filtre se présentant sous la forme d'un ruban, ledit canal d'écoulement comprenant en amont dudit filtre une chambre de répartition renfermant dans sa paroi opposée audit filtre une tête de détection dont la face active fait face à distance audit filtre et comprenant au moins une entrée pour le gaz, ledit canal d'écoulement étant relié en aval dudit filtre à une pompe d'aspiration, un moyen étant prévu pour faire avancer ledit filtre dans le sens de sa longueur devant la face active de la tête de détection, caractérisé par le fait qu'en vue de mesurer l'activité superficielle $\beta$ sur ledit filtre, dans une ambiance $\gamma$ , ladite tête de détection est formée par la tête de détection selon l'une quelconque des revendications 1 à 5.

7. Dispositif de détection selon la revendication 6, caractérisé par le fait qu'il comprend un appui entourant ledit canal d'écoulement et faisant face audit filtre et un bloc qui délimite dans ledit canal d'écoulement en aval dudit filtre une chambre à dépression et qui est monté coulissant pour se rapprocher ou s'éloigner dudit appui, ledit bloc comprenant un contre-appui qui entoure ledit canal d'écoulement et fait face audit appui de l'autre côté dudit filtre et que des moyens d'entraînement sont prévus pour déplacer ledit bloc dans le sens qui le rapproche dudit appui de manière que ledit contre-appui applique ou presse ledit filtre contre ledit appui pour que le canal d'écoulement soit étanche et dans le sens qui l'éloigne dudit appui de manière à libérer ledit filtre en vue de son avancement.

8. Dispositif selon la revendication 7, caractérisé par le fait que lesdits moyens d'entraînement sont formés par un système vis-écrou dont la vis ou l'écrou est solidaire dudit bloc et dont l'écrou ou la vis peut être entraîné(e) par un moteur électrique dans un sens ou dans l'autre pour rapprocher ou éloigner ledit bloc dudit appui.

9. Dispositif de détection selon la revendication 7, caractérisé par le fait que lesdits moyens d'entraînement comprennent au moins un ressort qui agit sur ledit bloc dans le sens qui le rapproche dudit appui et au moins un électro-aimant dont la partie mobile est reliée audit bloc, cet électro-aimant agissant à l'encontre du ressort en vue d'éloigner ledit bloc dudit appui.

10. Dispositif de détection selon l'une quelconque des revendications 7 à 9, caractérisé par le fait que ladite chambre à dépression que délimite ledit bloc est reliée à ladite pompe d'aspiration par un tuyau flexible ou un soufflet.

11. Dispositif de détection selon l'une quelconque des revendications 6 à 10, caractérisé par le fait qu'il comprend une fente latérale ouverte ou un espace libre latéral ouvert permettant une introduction dudit filtre en ruban entre ledit appui et ledit moyen presseur en n'importe quel endroit de sa longueur en le glissant latéralement.

12. Dispositif de détection selon l'une quelconque des revendications 6 à 11, caractérisé par le fait qu'il comprend une tubulure d'amenée du gaz formant en aval dudit filtre ledit canal d'écoulement et comprenant un conduit d'entrée se divisant en deux pour former une boucle, une partie de la longueur de ladite boucle formant ladite chambre de répartition et comprenant deux faces parallèles opposées dans lesquelles sont formées deux ouvertures correspondantes, l'une des ouvertures étant prévue pour ladite tête de détection tandis que la face extérieure de la paroi entourant l'autre ouverture forme ledit appui pour ledit filtre en ruban.

13. Dispositif de détection selon la revendication 12, caractérisé par le fait que les conduits formant ladite boucle sont de section rectangulaire.

14. Dispositif de détection selon l'une quelconque des revendications précédentes, caractérisé par le fait qu'il comprend une feuille en matière plastique montée de manière amovible en vue de son changement devant la face active de ladite tête de détection de manière à protéger cette tête.

15. Dispositif de détection selon la revendication 13, caractérisé par le fait que ladite feuille se trouve, dans la chambre de répartition, au niveau de sa paroi renfermant ladite tête de détection.

16. Dispositif de détection selon l'une quelconque des revendications 6 à 15, caractérisé par le fait que ledit moyen pour déplacer ledit filtre en ruban est prévu pour faire avancer ce filtre d'un pas lorsque la quantité de particules déposées sur la partie du filtre en regard de ladite tête de détection devient trop importante pour continuer la mesure de l'activité radioactive des particules déposées, en vue d'en disposer une partie neuve devant la tête de détection.

17. Dispositif de détection selon l'une quelconque des revendications 6 à 16, caractérisé par le fait qu'il est monté, avec les circuits électroniques de commande et de mesure qui y sont associés, dans une valise portable, l'entrée dudit canal d'écoulement et la sortie de ladite pompe d'aspiration débouchant à l'extérieur de cette valise, des moyens de signalisation lumineux et/ou sonores reliés auxdits circuits électroniques étant montés sur ladite valise et les moyens de signalisation lumineux étant visibles de l'extérieur de cette valise.

18. Dispositif de détection selon la revendication 17, caractérisé par le fait que ladite valise comprend deux compartiments séparés par une cloison et un couvercle par compartiment, l'un des couvercles donnant accès audit filtre tandis que l'autre donne accès auxdits circuits électroniques.

FIG.2

FIG.1

1/3

0079079

FIG.3

# FIG.4

**0079079**

Numéro de la demande

**RAPPORT DE RECHERCHE EUROPEENNE**

Office européen
des brevets

EP   82 11 0312

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | G 01 T   7/04 |
| Y | FR-A-2 456 331  (COMM. A L'ENERGIE ATOMIQUE) *Page 3, ligne 36 - page 5, ligne 6; page 5, ligne 27 - page 8, ligne 37; figures 1,2* | 1-8,10 -12,16 | |
| Y | US-A-4 140 912  (D.J.BRESSAN & R.E.LARSON) *Résumé;   colonne 2, lignes 9-37,52 - colonne 4, ligne 22; colonne 7, ligne 60 - colonne 8, ligne 6; figures 1,2* | 1,6,11 ,13-18 | |
| A | US-A-3 448 269  (M.DIEVAL et al.) *Colonne 2, ligne 52 - colonne 3, ligne 75; colonne 4, ligne 71 - colonne 5, ligne 72; figures 1-3* | 1,2,6, 7,9,11 | |
| A | GB-A-  838 144  (BARCROSS LTD.) *Page 1, ligne 56 - page 2, ligne 107; page 3, lignes 5-11; figure 1* | 1,2,17 | **DOMAINES TECHNIQUES RECHERCHES (Int. Cl. ³)** G 01 T G 01 N |
| A | FR-A-1 264 743  (CONTROLS FOR RADIATION, INC.) *Page 1, colonne 2, ligne 24 - page 2, colonne 2, ligne 4; page 2, colonne 2, lignes 26-49; page 3, colonne 1, lignes 20-50; page 3, colonne 2, lignes 20-28; page 4, colonne 1, lignes 11-41; figures 1-3* | 1,5,13 ,17,18 | |
| | ----- | | |

Le présent rapport de recherche a été établi pour toutes les revendications

| Lieu de la recherche LA HAYE | Date d'achèvement de la recherche 11-01-1983 | Examinateur DATTA S. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82